# FASCICULE DE BREVET EUROPEEN

(11) **EP 3 840 154 B1**
(45) Date de publication et mention de la délivrance du brevet: **28.01.2026**
(21) Numéro de dépôt: 20211640.6
(22) Date de dépôt: 03.12.2020
(51) Int. Cl.: H02G 3/14, H02G 3/08, H02G 3/10

(54) **APPAREILLAGE ELECTRIQUE ETANCHE**
WASSERDICHTES ELEKTROGERÄT
SEALED ELECTRICAL APPLIANCE

(30) Priorité: 20.12.2019 FR 1915140
(43) Date de publication de la demande: 23.06.2021
(60) Demande divisionnaire: 23189796.8
(73) Titulaire: Legrand France, 87000 Limoges (FR); Legrand SNC, 87000 Limoges (FR)
(72) Inventeur: BAUDOU, Alain, 87000 Limoges (FR); PUYBARAUD, Eric, 87170 Isle (FR); MALISCHEWSKI, Frédéric, 87700 Beynac (FR)
(74) Mandataire: Jacobacci Coralis Harle

(56) Documents cités:
- EP-A1- 1 860 748
- EP-A1- 3 091 549
- DE-A1- 102004 024 093
- DE-A1- 102005 052 794
- DE-U1- 29 803 339
- LEGRAND: "Plexo IP55", 15 July 2014 (2014-07-15), XP055725460, Retrieved from the Internet <URL:https://www.tim.pl/fileuploader/download/download/?d=1&file=GLOWNA/1131/111/AA/FA1/08/karta_069679.pdf> [retrieved on 20200826]

## Description

La présente invention concerne de manière générale le domaine des appareillages électriques.

Elle concerne plus particulièrement un appareillage électrique étanche comportant au moins un enjoliveur et un cadre support sur lequel est rapporté chaque enjoliveur, ledit cadre support comportant un rebord périphérique qui délimite au moins une ouverture accueillant ledit enjoliveur.

On connaît du document EP1860748 et de l'extrait du catalogue Legrand du 15 Juillet 2015 relatif à la gamme « Plexo IP55 », un appareillage électrique étanche du type précité. Dans un tel appareillage électrique, l'enjoliveur est équipé de moyens de montage qui coopèrent avec des moyens de montage complémentaires prévus dans le cadre support. Ces moyens de montage complémentaires prévus dans le cadre support sont disposés dans deux branches parallèles dudit cadre support.

Les moyens de montage prévus ici sont dédiés à une orientation particulière de l'enjoliveur, par exemple pour un montage horizontal.

Ainsi, lorsqu'un installateur souhaite changer l'orientation de montage, par exemple pour effectuer un montage vertical de l'enjoliveur, il est contraint d'utiliser un autre cadre support.

Le document DE102004024093 décrit un appareillage électrique multiposte qui n'est pas étanche et qui comprend un cadre et un enjoliveur dont le bord est muni d'éléments de montage destinés à coopérer avec des languettes de maintien élastique du cadre. Les éléments de montage et les languettes de maintien élastique permettent différentes dispositions fonctionnelles et en particulier le montage de l'enjoliveur selon différentes orientations (enjoliveur tourné à 90, 180 ou 270 degrés).

Le document DE29803339U1 décrit un appareillage électrique qui comprend un enjoliveur rapporté sur un cadre support. Mais, selon ce document, l'enjoliveur comprend une portion en saillie destinée à s'insérer dans une rainure prévue à cet effet sur un bord du cadre. Cette coopération de la portion en saillie et de la rainure impose un seul sens de montage de l'enjoliveur sur le cadre. Ce montage possible uniquement dans un sens est d'ailleurs confirmé par la forme globalement rectangulaire de l'appareillage électrique

Le but de la présente invention est donc de proposer un appareillage électrique étanche dans lequel un même cadre support peut être utilisé pour effectuer un montage selon différentes orientations, par exemple un montage vertical et un montage horizontal.

Plus particulièrement, on propose, selon l'invention, un appareillage électrique étanche conforme à la revendication 1.

Ainsi, avantageusement selon l'invention, le cadre support comprend des moyens de réception complémentaires des moyens de montage de l'enjoliveur dans deux positions de celui-ci, orientées à 90 degrés l'une par rapport à l'autre, par exemple l'une correspondant à une configuration verticale et l'autre à une configuration horizontale. Le même cadre support peut donc être utilisé lors d'un changement d'orientation de l'appareillage électrique.

D'autres caractéristiques non limitatives et avantageuses de l'appareillage électrique étanche conforme à l'invention, prises individuellement ou selon toutes les combinaisons techniquement possibles, sont décrites dans les revendications 2 et 3.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective éclatée d'un premier mode de réalisation d'un appareillage électrique dans une version en saillie,
- la figure 2 est une vue en perspective assemblée d'une partie de l'appareillage électrique de la figure 1,
- la figure 3 est une vue schématique partielle en perspective d'une partie de l'appareillage électrique de la figure 1,
- la figure 4 est une vue schématique en perspective éclatée du premier mode de réalisation de l'appareillage électrique dans une version à encastrer,
- la figure 5 est une vue schématique en face avant de l'enjoliveur de prise de courant de la figure 4,
- la figure 6 est une vue schématique partielle de côté des moyens de montage de l'enjoliveur de la figure 5,
- la figure 7 est une autre vue schématique partielle de côté des moyens de montage de l'enjoliveur de la figure 5,
- la figure 8 est une vue schématique partielle de la face avant de l'enjoliveur de la figure 5,
- la figure 9 est une autre vue schématique partielle de la face avant de l'enjoliveur de la figure 5,
- la figure 10 est une autre vue schématique partielle de côté des moyens de montage de l'enjoliveur de la figure 5,
- la figure 11 est une vue schématique partielle en coupe des deux enjoliveurs de la figure 1 rapportés sur le cadre support de l'appareillage électrique orienté horizontalement,
- la figure 12 est une vue schématique partielle en face avant d'une branche centrale du cadre support de la figure 11,
- la figure 13 est une vue schématique identique à celle de la figure 11 dans laquelle l'appareillage électrique est orienté verticalement,
- la figure 14 est une vue schématique en perspective d'une partie d'un deuxième mode de réalisation de l'appareillage électrique conforme à l'invention dans une version en saillie
- la figure 15 est une vue schématique en perspective d'un premier exemple d'enjoliveur destiné à être rapporté sur le cadre support de la figure 14,
- la figure 16 est une vue schématique en face avant de l'enjoliveur de la figure 15 rapporté sur le cadre support de la figure 14,
- la figure 17 est une vue schématique en perspective d'un deuxième exemple d'enjoliveur destiné à être rapporté sur le cadre support de la figure 14,
- la figure 18 est une vue schématique en perspective éclatée des moyens de montage de l'enjoliveur de la figure 17,
- la figure 19 est une vue schématique en face avant de l'enjoliveur de la figure 17 rapporté sur le cadre support de la figure 14,
- la figure 20 est une vue schématique en perspective d'un troisième exemple d'enjoliveur destiné à être rapporté sur le cadre support de la figure 14,
- la figure 21 est une vue schématique en perspective des moyens de montage de l'enjoliveur de la figure 20,
- la figure 22 est une vue schématique en face avant de l'enjoliveur de la figure 20 rapporté sur le cadre support de la figure 14,
- la figure 23 est une vue schématique en perspective d'un quatrième exemple d'enjoliveur destiné à être rapporté sur le cadre support de la figure 14,
- la figure 24 est une vue en face avant des moyens de montage de l'enjoliveur de la figure 23,
- la figure 25 est une vue schématique en face avant de l'enjoliveur de la figure 23 rapporté sur le cadre support de la figure 14,
- la figure 26 est une vue schématique en perspective d'un cinquième exemple d'enjoliveur destiné à être rapporté sur le cadre support de la figure 14, et
- la figure 27 une vue schématique en face avant de l'enjoliveur de la figure 26 rapporté sur le cadre support de la figure 14.

En préliminaire, on notera que les éléments identiques ou similaires des différents modes de réalisation de l'invention représentés sur les différentes figures seront, dans la mesure du possible, référencés par les mêmes signes de référence et ne seront pas décrits à chaque fois.

Dans la description qui va suivre, les termes « avant » et « arrière » seront utilisés par rapport à la direction du regard d'une personne sur l'élément décrit. L'avant de cet élément désigne le côté tourné vers la personne le regardant tandis que l'arrière désigne le côté tourné vers le support sur lequel est rapporté ledit élément.

Les termes « intérieur » et « extérieur » seront utilisés en référence au logement défini dans un appareillage électrique. Ainsi, une face interne est une face tournée vers l'intérieur du logement tandis qu'une face externe est une face tournée vers l'extérieur du logement.

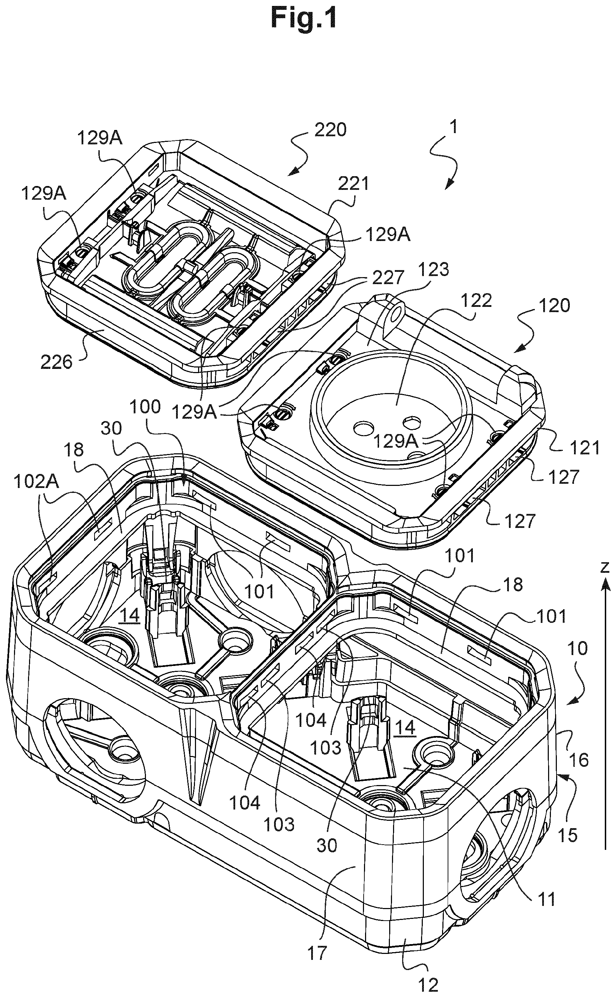

Sur les figures 1 à 13, on a représenté un premier mode de réalisation de l'appareillage électrique 1 ; 5 étanche, dans une version en saillie et dans une version à encastrer, comprenant au moins un enjoliveur 120, 220 et un cadre support 100 ; 200 sur lequel est rapporté l'enjoliveur 120, 220.

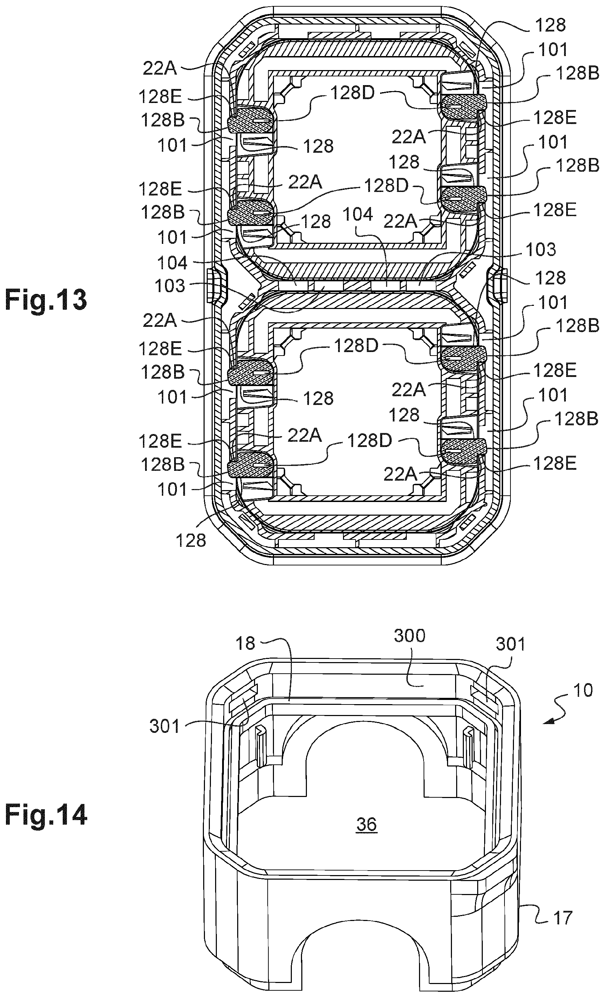

Sur les figures 14 à 27, on a représenté un deuxième mode de réalisation de l'appareillage électrique étanche, ici dans une version en saillie, comprenant l'enjoliveur 320, 420, 520, 620, 720 et un cadre support 300 sur lequel est rapporté l'enjoliveur 320, 420, 520, 620, 720. Selon une variante non représentée, ce deuxième mode de réalisation de l'appareillage électrique étanche pourrait être réalisé dans une version à encastrer.

Les modes de réalisation représentés sur les figures 1 à 13, 26 et 27 ne relèvent pas de l'invention et ne sont présents qu'à titre illustratif.

Quel que soit le mode de réalisation représenté, la version en saillie de l'appareillage électrique 1 comporte une boîte électrique 10 en deux parties.

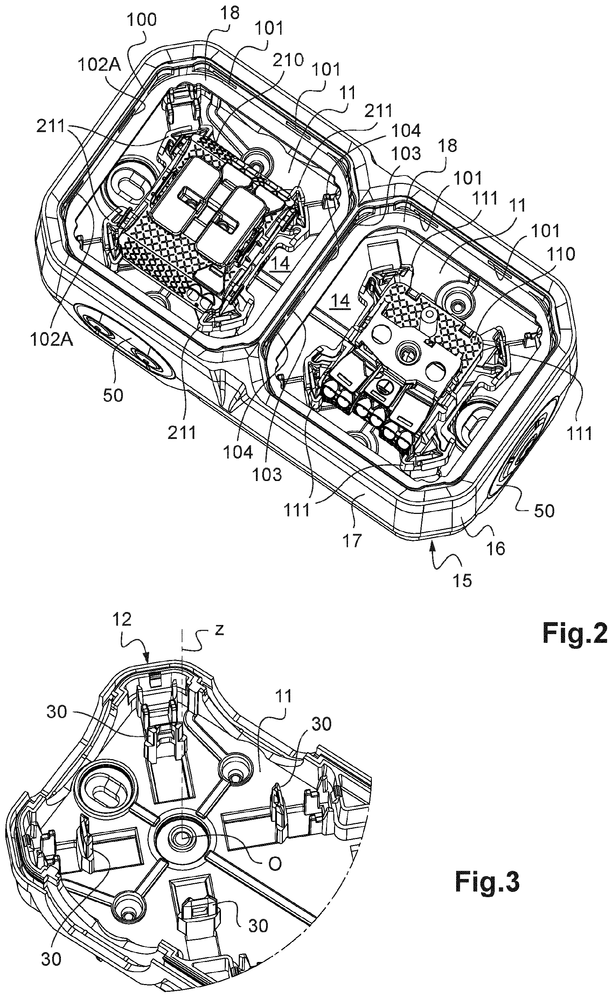

Comme le montrent les figures 1 et 2, cette boîte électrique 10 comprend un corps 15 qui présente une forme globalement parallélépipédique aux angles coupés. En variante, elle pourrait présenter une forme différente, par exemple cylindrique. La boîte électrique 10 représentée sur les figures 1 à 3 est une boîte multiposte, plus précisément ici double poste, tandis que celle représentée en partie sur la figure 14 est une boîte simple poste.

Le corps 15 de la boîte électrique 10 est ici réalisé en deux parties principales distinctes : une partie arrière 12 appelée « platine-support 12 » et une partie avant 17 appelée « cadre 17 », mais il pourrait très bien être réalisé en une seule partie. La platine-support 12 présente une paroi de fond 11, qui forme la paroi de fond 11 du corps 15, et une paroi latérale qui, assemblée au cadre 17, forme la paroi latérale 16 du corps 15.

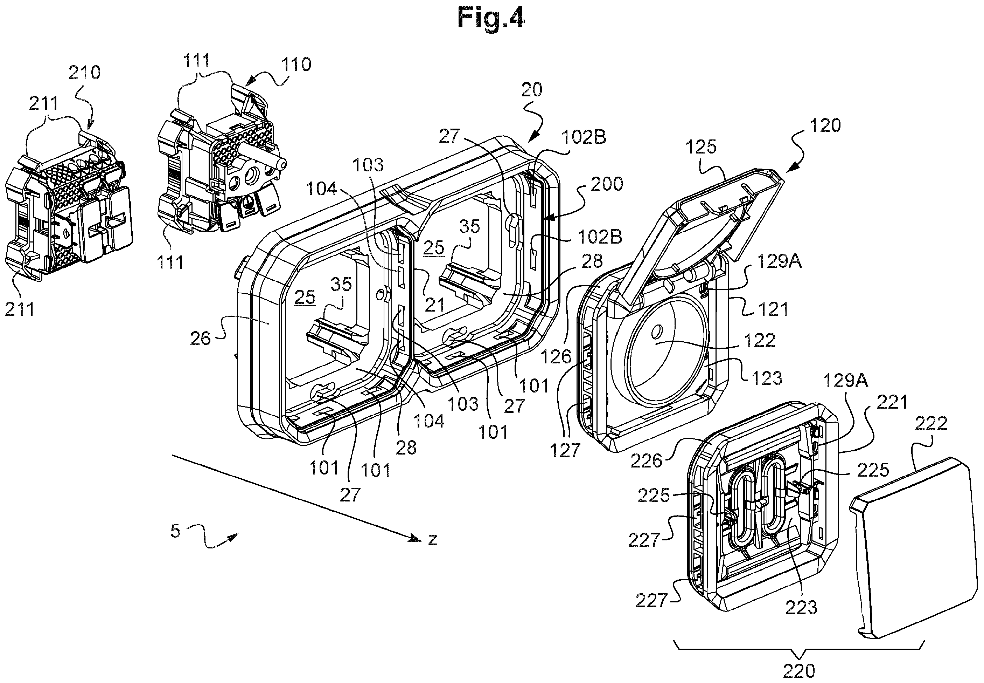

La paroi latérale 16 et la paroi de fond 11 du corps 15 délimitent un logement de réception adapté à recevoir l'enjoliveur 120, 220 ; 320, 420, 520, 620, 720 muni d'un mécanisme d'appareillage 110, 210, tel qu'un mécanisme 110 de prise de courant ou un mécanisme 210 de commutateur électrique (figures 2 et 4). La paroi de fond 11 est prévue pour être fixée à la paroi murale, tandis que la paroi latérale 16 est conçue pour protéger le mécanisme d'appareillage 110, 210 et pour recevoir l'enjoliveur 120, 220 ; 320, 420, 520, 620, 720.

Pour permettre le montage du mécanisme d'appareillage électrique 110, 210 dans la boîte électrique 10, la paroi de fond 11 de la platine-support 12 porte des montants 30 (figures 1 et 3). Ces montants 30 s'étendent, à l'intérieur dudit logement de réception, vers l'avant à partir de la paroi de fond 11. Ils s'étendent perpendiculairement à celle-ci. Les montants 30 comprennent en particulier des moyens de montage d'un socle du mécanisme d'appareillage 110, 210. Ces moyens de montage sont par exemple des moyens d'encliquetage qui reçoivent des moyens d'encliquetage 111, 211 complémentaires prévus sur le socle du mécanisme d'appareillage 110, 210 (figures 2 et 4). Ces moyens de montage présents sur les montants 30 permettent alors, lors du montage du mécanisme d'appareillage 110, 210 dans la boîte électrique 10, de positionner le socle du mécanisme d'appareillage 110, 210 dans la boîte électrique 10 à une distance déterminée de la paroi de fond 11 de la platine-support 12 de manière à laisser un espace libre pour placer aisément les fils de raccordement électrique.

Comme le montre la figure 3, pour chaque mécanisme d'appareillage, il est ici prévu quatre montants 30 disposés, par paire, de manière symétrique par rapport à un centre O de la paroi de fond 11 de la platine-support 12.

Le centre O de la paroi de fond 11 de la platine-support 12 est donc un centre de symétrie pour le positionnement des montants 30. Cette symétrie centrale dans le positionnement des montants 30 de la platine-support 12 permet d'autoriser le montage du mécanisme d'appareillage électrique 110, 210 dans la boîte électrique 10 dans différentes positions décalées l'une par rapport à l'autre par rotation autour d'un axe z (figure 3) orthogonal à la paroi de fond 11 de la platine-support 12 et passant par le centre O de cette paroi de fond 11. Ainsi, lorsque l'orientation de la boîte électrique 10 est modifiée, en étant par exemple tournée de 90 degrés pour passer d'une configuration horizontale à verticale (ou inversement), l'orientation du mécanisme d'appareillage 110, 210 est également modifiée en conséquence.

Comme le montrent les figures 1 et 2, la paroi latérale 16 du corps 15 de la boîte électrique 10 est découpée pour recevoir au moins un embout passe-câble 50 pour le passage d'un câble électrique ou d'une gaine électrique de type ICTA ou d'un tube IRL, destiné à alimenter des bornes de connexion du mécanisme d'appareillage 110, 210.

Pour la fixation de l'enjoliveur 120, 220 ; 320, 420, 520, 620, 720 sur la boîte électrique 10, il est prévu dans une partie avant de la paroi latérale 16 du corps 15 de la boîte électrique 10, d'une part, un trottoir 18 de butée de l'enjoliveur 120, 220 ; 320, 420, 520, 620, 720 faisant saillie à l'intérieur du logement de réception (voir figures 1, 2 et 14), et, d'autre part, un cadre support 100 ; 300 muni d'un rebord périphérique délimitant une ouverture d'accueil 14 ; 36 de l'enjoliveur 120, 220 ; 320, 420, 520, 620, 720 . Le trottoir 18 de butée qui court le long de la paroi latérale 16 délimitant le logement de réception délimite lui-même une ouverture adaptée au passage d'un socle du mécanisme d'appareillage 110, 210. Ainsi, chaque ouverture délimitée par le trottoir 18 est ici de forme carrée, mais elle pourrait être de toute autre forme tant qu'elle est adaptée à la forme du socle du mécanisme d'appareillage.

Selon le premier mode de réalisation représenté dans une version à encastrer sur la figure 4, chaque enjoliveur 120, 220 est adapté à être monté dans des aménagements d'un cadre d'encastrement 20, ici un cadre d'encastrement multiposte, plus particulièrement un cadre d'encastrement double poste à fixation horizontale.

Comme le montre la figure 4, le cadre d'encastrement 20 double postes comprend essentiellement une paroi latérale 26 qui délimite intérieurement une ouverture principale, divisée en deux par une branche interne 21 de manière à délimiter deux ouvertures d'accueil 25 de deux enjoliveurs 120, 220, chacun muni d'un mécanisme d'appareillage 110, 210. Chaque ouverture d'accueil 25 présente une forme globalement carrée aux angles coupés. En variante, elle pourrait présenter une forme différente, par exemple cylindrique, et en tout état de cause une forme adaptée à la forme extérieure de l'enjoliveur 120, 220. Il est prévu à l'arrière du cadre d'encastrement 20 des moyens de montage à une boîte d'encastrement (non représentée), notamment des ouvertures 27 (figure 4) pour le passage d'une vis de fixation destinée à être fixée dans la boîte d'encastrement.

De manière analogue à la boite électrique 10 décrite précédemment, le cadre d'encastrement 20 comprend, pour la fixation de chaque enjoliveur 120, 220, un trottoir 28 de butée faisant saillie à l'intérieur de chaque ouverture d'accueil 25 ainsi que le cadre support 200 muni d'un rebord périphérique délimitant l'ouverture d'accueil 25 de l'enjoliveur 120, 220. Le trottoir 28 de butée qui court le long de la paroi latérale 26 délimitant le logement de réception délimite lui-même une ouverture adaptée au passage du socle du mécanisme d'appareillage 110, 210. Ainsi, chaque ouverture délimitée par le trottoir 28 est ici de forme carrée, mais elle pourrait être de toute autre forme tant qu'elle est adaptée à la forme du socle du mécanisme d'appareillage.

Pour permettre le montage du mécanisme d'appareillage électrique 110, 210 sur le cadre d'encastrement 20, ce dernier porte, à l'arrière, des montants 35 (figure 4). Ces montants 35 s'étendent, à l'intérieur dudit logement de réception, vers l'arrière à partir d'une face arrière du trottoir 28 de butée. Ils s'étendent perpendiculairement à celui-ci. Les montants 35 comprennent en particulier les moyens de montage du socle du mécanisme d'appareillage 110, 210. Ces moyens de montage sont par exemple des moyens d'encliquetage qui reçoivent des moyens d'encliquetage 111, 211 complémentaires prévus sur le socle du mécanisme d'appareillage 110, 210.

Comme le montre la figure 4, pour chaque mécanisme d'appareillage 110, 210, il est ici prévu quatre montants 35 disposés, par paire, de manière symétrique par rapport à un centre de chaque ouverture d'accueil 25. Ici, les montants 35 sont disposés en regard des coins en angles coupés de chaque ouverture d'accueil 25.

Le centre de chaque ouverture d'accueil 25 est donc un centre de symétrie pour le positionnement des montants 35. Cette symétrie centrale dans le positionnement des montants 35 permet d'autoriser le montage du mécanisme d'appareillage électrique 110, 210 sur le cadre d'encastrement 20 dans différentes positions décalées l'une par rapport à l'autre par rotation autour d'un axe z (figure 4). Ainsi, lorsque l'orientation du cadre d'encastrement 20 est modifiée, en étant par exemple de tournée de 90 degrés pour passer d'une configuration horizontale à verticale (ou inversement), l'orientation du mécanisme d'appareillage 110, 210 est également modifiée en conséquence.

Comme le montrent les figures 1, 4 et 14, le cadre support 100 ; 200 ; 300 de la boîte électrique 10 ou du cadre d'encastrement 20 est conçu pour recevoir l'enjoliveur 120, 220 ; 320, 420, 520, 620, 720. Pour cela, le cadre support 100 ; 200 ; 300 comprend, sur une face intérieure longeant chaque ouverture d'accueil 25, des moyens de réception complémentaires des moyens de montage de l'enjoliveur 120, 220 ; 320, 420, 520, 620, 720.

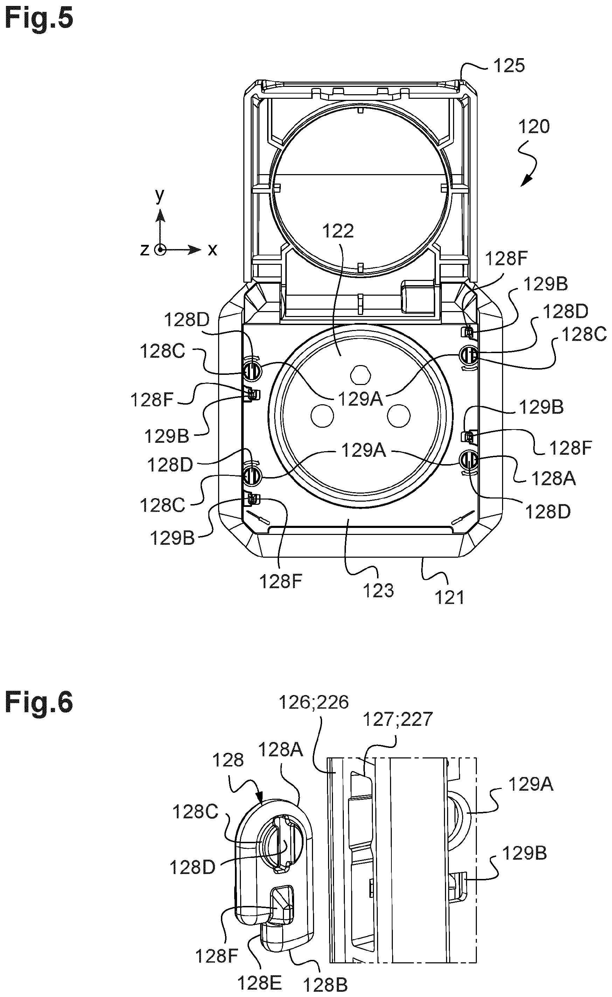

Dans le cas du mécanisme d'appareillage 110 de prise de courant, l'enjoliveur 120 ; 320, 420, 520, 720 comprend, à l'intérieur d'une partie structurelle 121 ; 321, 421, 521, 721 en forme de cadre, un puits d'insertion 122 d'une fiche électrique (figures 1, 4, 5, 15, 17, 20 et 26). La partie structurelle 121 ; 321, 421, 521, 721 en forme de cadre présente une partie latérale 126 ; 326, 426, 526, 726 s'étendant vers l'arrière à partir de sa face avant 123 ; 323, 423, 523, 723 sur une hauteur prédéterminée. L'enjoliveur 120 porte en outre un capot rabattable 125 de protection du puits d'insertion 122 (figures 4 et 5).

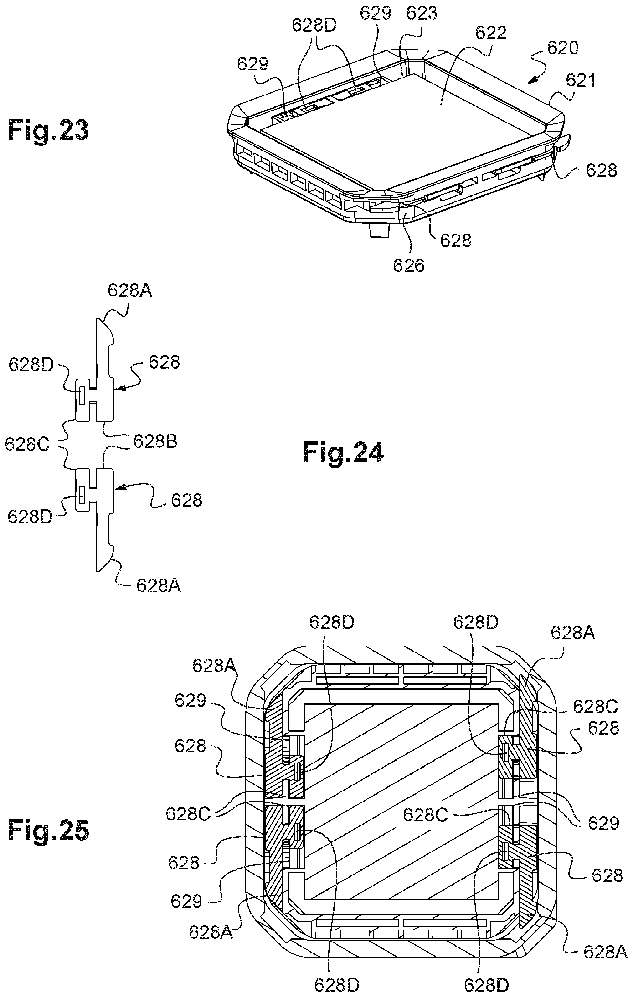

Dans le cas d'un mécanisme d'appareillage 210 de commutateur électrique, l'enjoliveur 220 ; 620 comporte une touche de commande 222 ; 622 (figures 4 et 23) adaptée à s'encliqueter sur des moyens de réception 225 prévus sur la face avant 223 de la partie structurelle 221 en forme de cadre. Ces moyens de réception 225 sont prévus pour offrir à la touche de commande 222 une mobilité en basculement. La partie structurelle 221 ; 621 en forme de cadre présente une partie latérale 226 ; 626 s'étendant vers l'arrière à partir de sa face avant 223 ; 623 sur une hauteur prédéterminée.

Quel que soit le mécanisme d'appareillage 110, 210, la partie structurelle 121, 221 ; 321, 421, 521, 621, 721 en forme de cadre comprend des moyens de montage de l'enjoliveur 120, 220 ; 320, 420, 520, 620, 720 sur le cadre support 100 ; 200 ; 300. Ces moyens de montage de l'enjoliveur 120, 220 ; 320, 420, 520, 620, 720 sont destinés à coopérer avec des moyens de réception complémentaires prévus dans le rebord périphérique du cadre support 100 ; 200 ; 300.

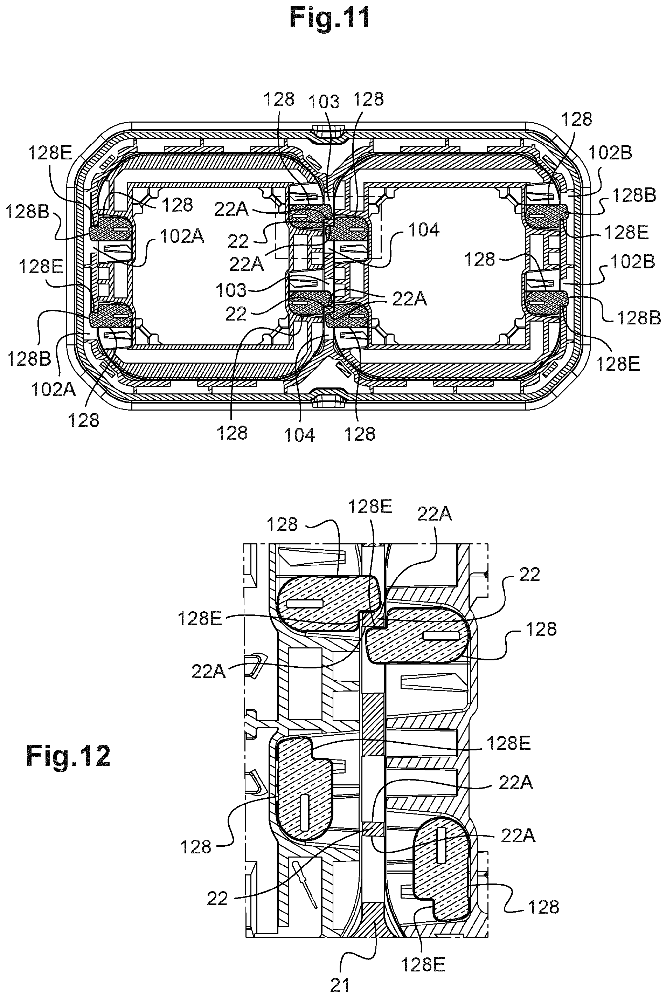

De manière avantageuse, les moyens de montage de l'enjoliveur 120, 220 ; 320, 420, 520, 620, 720 sont adaptés à coopérer avec les moyens de réception complémentaires prévus dans le cadre support 100 ; 200 ; 300 dans chacune de deux positions de l'enjoliveur 120, 220 ; 320, 420, 520, 620, 720 sur le cadre support 100 ; 200 ; 300. Les deux positions sont orientées à 90 degrés l'une par rapport à l'autre. Par exemple, la deuxième position est obtenue par rotation de 90 degrés autour de l'axe z (figure 1). Ces deux positions correspondent par exemple à un montage de l'appareillage électrique selon une configuration horizontale (figures 4 et 11) et selon une configuration verticale (figure 13).

Pour cela, selon le premier mode de réalisation, en version en saillie ou en version à encastrer, représenté sur les figures 1 à 4, ce cadre support 100 ; 200 comporte deux groupes de moyens de réception différents : un premier groupe de moyens de réception pour le montage de l'enjoliveur 120, 220 selon la première position et un deuxième groupe de moyens de réception pour le montage de l'enjoliveur 120, 220 selon la deuxième position tournée de 90 degrés par rapport à la première position.

Dans ce premier mode de réalisation, l'enjoliveur 120, 220 ne comprend qu'un seul groupe de moyens de montage qui vont permettre son montage sur le cadre support 100 ; 200 dans les deux positions différentes orientées à 90 degrés l'une par rapport à l'autre indifféremment. Cet unique groupe de moyens de montage de l'enjoliveur 120, 220 va donc coopérer avec l'un ou l'autre des groupes de moyens de réception du cadre support 100 ; 200 (en fonction de la position de montage choisie).

Ainsi, si par exemple l'une des deux positions correspond à une configuration verticale pour le montage de l'appareillage électrique 1 ; 5 et l'autre position correspond à une configuration horizontale, le même cadre support 100 ; 200 pourra être utilisé pour les deux configurations (avec des moyens de réception complémentaires des moyens de montage de l'enjoliveur adaptés à chacune des configurations).

Selon le premier mode de réalisation représenté sur les figures 1, 2 et 4, les moyens de réception prévus sur une portion avant du rebord périphérique du cadre support 100 ; 200 sont ici formés par des logements 101, 102A, 102B, 103, 104 prévus dans les quatre branches du cadre support 100 délimitant l'ouverture d'accueil 14 ; 25.

En particulier ici, ces logements sont des renfoncements globalement rectangulaires formés en creux sur une face interne de la portion avant du rebord périphérique du cadre support 100 ; 200. Ils débouchent vers l'intérieur du cadre support 100 ; 200, c'est-à-dire qu'ils sont accessibles depuis l'ouverture d'accueil 14 ; 25.

D'après ce premier mode de réalisation, chacune des quatre branches du cadre support 100 ; 200 comprend au moins deux logements 101, 102A, 102B, 103, 104. Plus précisément, chaque branche du cadre support 100 ; 200 qui délimite un côté de deux ouvertures d'accueil 14 ; 25 successives, ici la branche interne 21, comprend quatre logements 103, 104 tandis que chaque branche délimitant un côté d'une seule ouverture d'accueil comprend deux logements 101, 102A, 102B. En particulier, La branche interne 21 comprend deux paires de logements 103, 104 : une première paire de logements 103 servant au montage d'un premier enjoliveur 120 dans l'une des ouvertures d'accueil 14 ; 25 et une deuxième paire de logements 104 servant au montage d'un deuxième enjoliveur 220 dans l'autre ouverture d'accueil 14 ; 25, juxtaposée à la première ouverture d'accueil 14 ; 25. L'agencement particulier des quatre logements 103, 104, alignés et décalés les uns à la suite des autres, dans la branche interne 21 permet notamment de réduire l'épaisseur de la branche interne 21 séparant deux ouvertures d'accueil 14 ; 25 successives. Cela est particulièrement avantageux dans le cas de l'appareillage électrique 5 en version à encastrer dans lequel il est nécessaire de respecter les tailles d'entraxe standard (de l'ordre de 60 mm) imposées entre deux postes successifs dans une configuration multiposte (chaque poste étant espacé, dans ce cas, de 71 mm).

Chaque groupe de moyens de réception associé à une position de montage de l'enjoliveur 120, 220 est ici constitué par quatre logements 101, 102A, 102B, 103, 104 localisés dans les branches opposées du cadre support 100 ; 200 délimitant l'ouverture d'accueil 14 ; 25. Ici, comme visible sur la figure 1, pour l'une des deux ouvertures d'accueil 14, 25, les moyens de réception du groupe associé à la première position de montage de l'enjoliveur 120, 220 (ici selon une configuration horizontale) sont par exemple formés par les deux logements 102A et les deux logements 104 de la branche interne 21. Pour l'autre ouverture d'accueil 14, 25, comme le montre la figure 4, les moyens de réception du groupe associé à la première position de montage de l'enjoliveur 120, 220 sont par exemple formés par les deux logements 102B et les deux logements 103 de la branche interne 21. Les moyens de réception du groupe associé à la deuxième position (ici selon une configuration verticale) sont formés par les deux logements 101 des branches opposées du cadre support 100 ; 200 (visibles uniquement sur l'une des deux branches sur les figures 1 et 4).

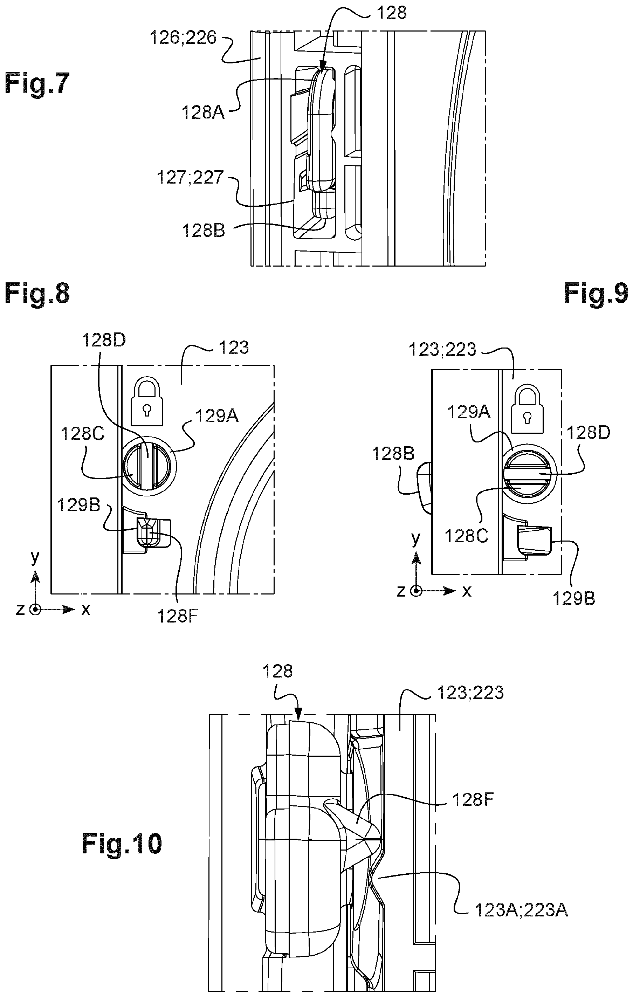

Comme le montrent les figures 6 et 7, les moyens de montage de l'enjoliveur 120, 220 sont ici des languettes quart de tour 128 déplaçables en rotation d'un quart de tour entre une position déverrouillée et une position verrouillée et accessibles par la face avant 123, 223 de l'enjoliveur 120, 220 au travers d'une fenêtre de manœuvre 129A.

Ces languettes quart de tour 128 sont logées dans des logements 127, 227 dédiés de la partie latérale 126, 226 de l'enjoliveur 120, 220. Ces logements 127, 227 débouchent vers l'extérieur de l'enjoliveur 120, 220 et sont destinés à être mis en correspondance avec les logements 101, 102A, 102B, 103, 104 du cadre support 100 ; 200. Chaque logement 127, 227 présente une forme interne permettant d'accueillir entièrement la languette quart de tour associée en position déverrouillée et autorisant le pivotement de celle-ci d'un quart de tour jusqu'à sa position verrouillée (dans laquelle une portion de la languette quart de tour fait saillie du logement 127, 227 concerné).

Il est ici prévu quatre languettes quart de tour 128, deux par côté opposé de la partie latérale 126, 226 de l'enjoliveur 120, 220.

Chaque languette quart de tour 128 est déplaçable entre la position déverrouillée et la position verrouillée de manière à autoriser le montage de l'enjoliveur 120, 220 sur le cadre support 100 ; 200 et le verrouiller sur celui-ci. Ici, chaque languette quart de tour 128 est déplaçable en rotation d'un quart de tour autour de l'axe z orthogonal à la face avant 123, 223 de l'enjoliveur 120, 220 (figure 5). Toutes les languettes quart de tour 128 sont déplaçables en rotation dans un même sens prédéfini depuis la position verrouillée pour atteindre la position déverrouillée (et par symétrie dans un même autre sens prédéfini depuis la position déverrouillée pour atteindre la position verrouillée).

En position déverrouillée, chaque languette quart de tour 128 est entièrement logée dans le logement 127, 227 associé (figures 7 et 8). En position verrouillée, une portion de chaque languette quart de tour 128 fait saillie du logement 127, 227 associé (figure 9) et se loge dans le logement 101, 102A, 102B, 103, 104 correspondant du cadre support 100 ; 200.

Comme le montrent les figures 6 et 7, chaque languette quart de tour 128 présente une forme allongée. Chaque languette quart de tour 128 comprend deux parties : une partie de manœuvre 128A et une partie de verrouillage 128B.

Comme le montrent également les figures 6 et 7, la partie de manœuvre 128A comprend un bord en arc de cercle positionné contre une partie en arc de cercle du logement 127, 227 correspondant et un plot 128C cylindrique en saillie de la face avant de la languette quart de tour 128 mis en correspondance avec la fenêtre de manœuvre 129A de manière à autoriser le pivotement de la languette quart de tour 128. Chaque fenêtre de manœuvre 129A présente une forme complémentaire du plot 128C cylindrique de la languette quart de tour 128 associée (figures 5, 6, 8 et 9).

Le plot 128C cylindrique est muni d'une encoche de manœuvre 128D accessible au travers de la fenêtre de manœuvre 129A. La pointe d'un outil tel qu'un tournevis est introduite, au travers de la fenêtre de manœuvre 129A, dans cette encoche de manœuvre 128D afin de faire pivoter la languette quart de tour 128 entre ses positions déverrouillée et verrouillée (et inversement).

Comme le montre la figure 8, en position déverrouillée, chaque encoche de manœuvre 128D s'étend dans le plan de la face avant 123, 223 de l'enjoliveur 120, 220 selon l'axe Y.

Comme le montre la figure 9, en position verrouillée, l'encoche de manœuvre 128D s'étend dans le plan de la face avant 123, 223 de l'enjoliveur selon l'axe X.

Comme le montrent les figures 6 et 12, la partie de verrouillage 128B de chaque languette quart de tour 128 forme, sur son extrémité opposée à l'extrémité en arc de cercle de la partie de manœuvre 128A, un rebord de butée 128E. Ce rebord de butée 128E présente une forme en angle droit. Chaque rebord de butée 128E est conçu pour, en position verrouillée de la languette quart de tour 128, venir en butée avec un rebord de butée 22A du cadre support 100 ; 200 (décrit ci-après, voir figures 11 à 13).

En position verrouillée, l'extrémité de la partie de verrouillage 128B longeant le rebord de butée 128E est destinée à venir se loger dans le logement 101, 102A, 102B, 103, 104 associé du cadre support 100 ; 200. Ce logement 101, 102A, 102B, 103, 104 associé est placé en regard du logement 127, 227 correspondant de la paroi latérale 126, 226 de l'enjoliveur 120, 220 dans lequel est logée la languette quart de tour 128 concernée.

Comme cela est représenté sur la figure 6, la partie de verrouillage 128B de chaque languette quart de tour 128 comprend également, sur sa face avant, une portion 128F faisant saillie de cette face avant. Cette portion 128F forme un bossage sur la face avant de la partie de verrouillage 128B de chaque languette quart de tour 128. Ce bossage est adapté à être mis en correspondance avec une protubérance interne 123A, 223A associée de l'enjoliveur 120, 220 (introduite ci-après) lors du déplacement de la languette quart de tour 128 entre ses positions déverrouillée et verrouillée. Il sert également de cran d'arrêt en position déverrouillée et en position verrouillée de la languette quart de tour 128.

En position déverrouillée, la portion 128F faisant saillie de chaque languette quart de tour 128 est destinée à venir se loger dans une fenêtre de verrouillage 129B prévue sur la face avant 123, 223 de l'enjoliveur 120, 220 (figures 5, 6, 8 et 9). Comme le montrent les figures 5, 6, 8 et 9, chaque fenêtre de verrouillage 129B est placée à une distance prédéterminée de la fenêtre de manœuvre 129A qui lui est associée. Cette fenêtre de verrouillage 129B présente une forme complémentaire de la portion 128F faisant saillie de chaque languette quart de tour 128. Ainsi, comme le montre la figure 8, en position déverrouillée, la portion 128F faisant saillie de la face avant de la languette quart de tour 128 est visible depuis l'avant de l'enjoliveur 120, 220 (et donc depuis l'avant de l'appareillage électrique 1 ; 5). En revanche, comme le montre la figure 9, en position verrouillée, la portion 128F faisant saillie de la face avant de la languette quart de tour 128 n'est pas introduite dans la fenêtre de verrouillage 129B (cette fenêtre est donc vide). De manière avantageuse, la fenêtre de verrouillage 129B joue donc le rôle de fenêtre témoin du verrouillage de l'enjoliveur 120, 220 sur le cadre support 100 ; 200.

Comme le montre la figure 10, la face interne de chaque logement 127, 227 de la paroi latérale 126, 226 de l'enjoliveur 120, 220, comprend la protubérance interne 123A, 223A. Cette protubérance interne 123A, 223A est positionnée en regard de la languette quart de tour 128. Cette protubérance interne 123A, 223A forme le passage d'un point dur pour la portion 128F faisant saillie de la languette quart de tour 128 associée lorsque celle-ci est déplacée entre ses positions déverrouillée et verrouillée. Cette protubérance interne 123A, 223A est alors déformée par la portion 128F faisant saillie de chaque languette quart de tour 128 afin que la languette quart de tour 128 soit déplacée entre ses positions déverrouillée et verrouillée. La protubérance interne 123A, 223A permet donc d'indexer la position verrouillée lors du verrouillage de l'enjoliveur 120, 220 sur le cadre support 100 ; 200.

Dans le cas de l'appareillage électrique 1 ; 5 double poste tel que représenté sur les figures 1, 2, 4, 11 et 13, comme décrit précédemment, les deux paires de logements 103, 104 de la branche interne 21 du cadre support 100 ; 200 sont décalés de manière à être alignées le long de la branche interne 21. Ainsi, de manière avantageuse, comme le montrent les figures 11 et 12, ce décalage permet un agencement en quinconce des languettes quart de tour 128 lorsqu'elles sont en position verrouillée dans cette branche interne 21. De plus, comme le montrent également les figures 11 et 12, une paroi 22 séparant deux logements 103 et 104 juxtaposés forme le rebord de butée 22A du cadre support 100 ; 200 pour le rebord de butée 128E de la partie de verrouillage 128B de la languette quart de tour 128 lorsque cette dernière est en position verrouillée. Ainsi, une paroi 22 forme deux rebords de butée 22A pour deux languettes quart de tour 128 agencées en quinconce. Finalement, cet agencement en quinconce permet de réduire l'épaisseur de la branche interne 21, et en particulier de respecter les tailles d'entraxe standard imposées entre deux postes successifs dans une configuration multiposte de l'appareillage électrique 5 dans une version à encastrer.

Selon le deuxième mode de réalisation de l'appareillage électrique conforme à l'invention représenté sur la figure 14, le cadre support 300 comporte un seul groupe de moyens de réception coopérant avec le seul groupe de moyens de montage de l'enjoliveur 320, 420, 520, 620, 720 selon deux positions orientées à 90 degrés l'une par rapport à l'autre. Ainsi, de manière avantageuse ici, un seul groupe de moyens de réception dans le cadre support 300 permet le montage de l'enjoliveur 320, 420, 520, 620, 720 selon les deux positions différentes orientées à 90 degrés l'une de l'autre.

Selon ce deuxième mode de réalisation de l'invention, les moyens de réception prévus sur une portion avant du rebord périphérique du cadre support 300 sont ici formés par des logements 301 prévus dans les coins du cadre support 300. Plus particulièrement, les logements 301 sont prévus dans les parties en angles coupés du cadre support 300 positionnées aux quatre coins de l'ouverture d'accueil 36 de l'enjoliveur 320, 420, 520, 620, 720 dans la boîte électrique (figure 14) ou le cadre d'encastrement (non représenté pour ce deuxième mode de réalisation).

En particulier ici, ces logements 301 sont des renfoncements globalement rectangulaires formés en creux dans ces parties en angles coupés du cadre support 301.

Dans la suite de cette description, on va décrire différents types d'enjoliveurs 320, 420, 520, 620, 720 de l'appareillage électrique selon ce deuxième mode de réalisation de l'invention qui comportent chacun des moyens de montage adéquats pour coopérer avec les logements 301 du cadre support 300.

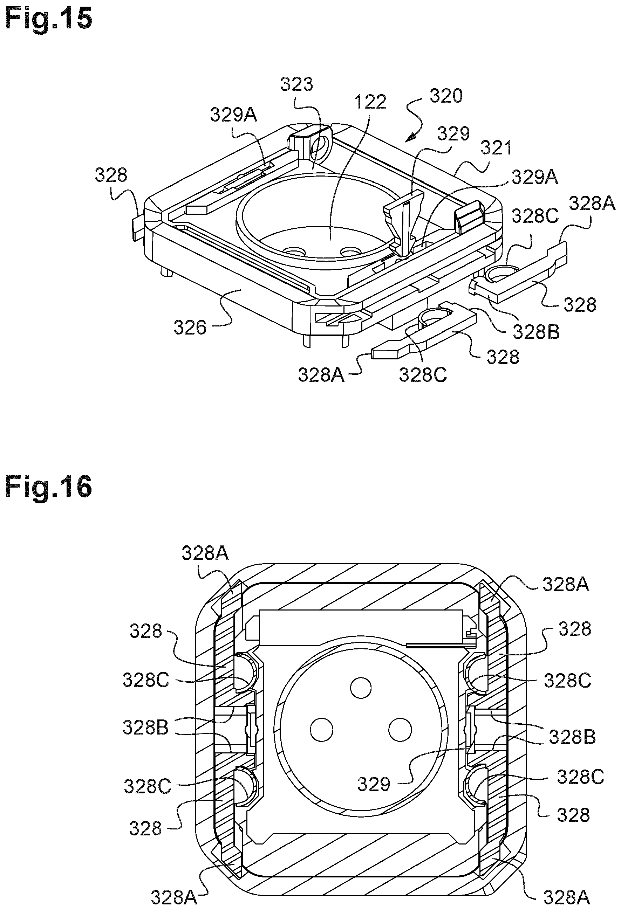

Selon un premier type d'enjoliveur 320, 420, 520, 620 représenté sur les figures 15 à 25, les moyens de montage de l'enjoliveur 320, 420, 520, 620 sont des éléments déplaçables 328, 428, 528, 628 à translation, dans un plan parallèle à un plan moyen de l'enjoliveur 320, 420, 520, 620, entre une position rétractée et une position sortie. La position sortie des éléments déplaçables 328, 428, 528, 628 correspond au verrouillage de l'enjoliveur 320, 420, 520, 620 dans les logements 301 du cadre support 300. Ces éléments déplaçables 328, 428, 528, 628 sont par exemple métalliques.

Selon les configurations représentées sur les figures 15 à 19 et 23 à 25, il est prévu quatre éléments déplaçables 328, 428, 628 positionnés par paire dans des logements prévus dans la paroi latérale 326, 426, 626 de l'enjoliveur 320, 420, 620. Chaque paire d'éléments déplaçables 328, 428, 628 est ici destinée à coopérer avec deux des logements 301 du cadre support 300 (donc un élément déplaçable 328, 428, 628 coopère avec un logement 301 correspondant).

Plus particulièrement, les deux paires d'éléments déplaçables 328, 428, 628 sont positionnées dans des côtés opposés de la paroi latérale 326, 426, 626 de l'enjoliveur 320, 420, 620. Comme le montrent les figures 15 à 19 et 23 à 25, les éléments déplaçables 328, 428, 628 de chaque paire sont positionnés de manière symétrique dans les logements prévus dans la paroi latérale 326, 426, 626.

Comme le montrent les figures 15, 18 et 24, chaque élément déplaçable 328, 428, 628 présente une forme de bras. Comme le montrent les figures 15, 16, 18, 19, 24 et 26, le bras de chaque élément déplaçable 328, 428, 628 comprend une extrémité libre 328A, 428A, 628A tronquée de forme complémentaire à la partie en angle coupé dans laquelle est formé le logement 301 constituant le moyen de réception associé dans le cadre support 300. Cette extrémité libre du bras de chaque élément déplaçable 328, 428, 628 est donc destinée à coopérer avec le logement 301 correspondant du cadre support 300. L'extrémité opposée 328B, 428B, 628B de chaque élément déplaçable 328, 428, 628 est conformée pour correspondre à l'actionneur utilisé pour déplacer cet élément déplaçable 328, 428, 628.

Pour les exemples représentés sur les figures 15, 16 et 23 à 25, chaque élément déplaçable 328, 628 est entraîné par un actionneur 329 mobile en translation de manière à déplacer cet élément déplaçable 328, 628 depuis sa position rétractée vers sa position sortie, c'est-à-dire pour le positionner dans la position permettant le verrouillage de l'enjoliveur 320, 620 sur le cadre support 300. En d'autres termes, l'actionneur 329 est configuré pour écarter les éléments déplaçables 328, 628 de chaque paire l'un de l'autre.

Dans l'exemple représenté sur les figures 15 et 16, l'actionneur 329 est un élément en forme d'éclisse. Cet actionneur 329 est introduit, par l'avant, dans une direction orthogonale au plan moyen de l'enjoliveur 320, dans un orifice 329A prévu à l'avant sur le cadre support 300 afin d'agir sur chaque élément déplaçable 328 pour déplacer ce dernier entre sa position rétractée et sa position sortie. Un unique actionneur 329 est adapté à déplacer simultanément les deux éléments déplaçables 328 de chaque paire et les écarter l'un de l'autre. En pratique, lorsque l'actionneur 329 est introduit dans l'orifice 329A, le déplacement de l'avant vers l'arrière, perpendiculairement au plan moyen de l'enjoliveur 320, de cet actionneur 329 entraîne un déplacement de chaque élément déplaçable 328, en translation selon une direction transversale à la direction de déplacement de l'actionneur 329 (et parallèle au plan moyen de l'enjoliveur 320).

Dans l'exemple représenté sur les figures 15 et 16, l'extrémité opposée 328B de l'élément déplaçable 328 comprend un élément élastique de rappel formé par une lame ressort 328C. Cette lame ressort 328C agit en permanence sur chaque élément déplaçable 328 pour le rappeler en position rétractée. Ainsi, l'actionneur 329 agit, à l'intérieur de la partie structurelle 321 en forme de cadre de l'enjoliveur 320, à l'encontre de chaque lame ressort 328C des éléments déplaçables 328. Lorsque l'actionneur 329 est retiré de l'orifice 329A, chaque élément déplaçable 328 de chaque paire est donc rappelé dans sa position rétractée.

Dans l'exemple représenté sur les figures 23 à 25, l'extrémité opposée 628B de chaque élément déplaçable 628 comprend une partie de manœuvre 628C conçue pour coopérer avec l'extrémité d'un outil de manœuvre pour permettre à un utilisateur de déplacer chaque élément déplaçable 628 en translation. Chaque partie de manœuvre 628C présente une forme globalement rectangulaire.

Comme le montrent les figures 23 à 25, chaque partie de manœuvre 628C comprend une fenêtre de manœuvre 628D. Cette fenêtre de manœuvre 628D présente ici une forme rectangulaire. Cette fenêtre de manœuvre 628D est conçue pour recevoir la pointe d'un outil de manœuvre comme un tournevis afin de déplacer chaque élément déplaçable 628 depuis sa position rétractée vers sa position sortie (et inversement).

Pour cela, en correspondance de chaque partie de manœuvre 628C, la face avant de l'enjoliveur 623 comprend des fenêtres 629 desquelles émergent chaque partie de manœuvre 628C de chaque élément déplaçable 628. Ces fenêtres 629 présentent ici une forme rectangulaire similaire à celle des parties de manœuvre 628C mais une longueur plus grande que celle de la partie de manœuvre 628C associée. La longueur de chaque fenêtre 629 correspond à l'amplitude de déplacement nécessaire pour déplacer chaque élément déplaçable 628 de sa position rétractée jusqu'à sa position sortie.

Finalement, un outil de manœuvre comme un tournevis utilisé depuis l'avant de l'enjoliveur 620 permet de déplacer chaque élément déplaçable 628 indépendamment afin de le déplacer entre sa position rétractée et sa positon sortie de manière à verrouiller l'enjoliveur 620 sur le cadre support 300 et à le déplacer entre sa position sortie et sa position rétractée de manière à déverrouiller l'enjoliveur 620 du cadre support 300.

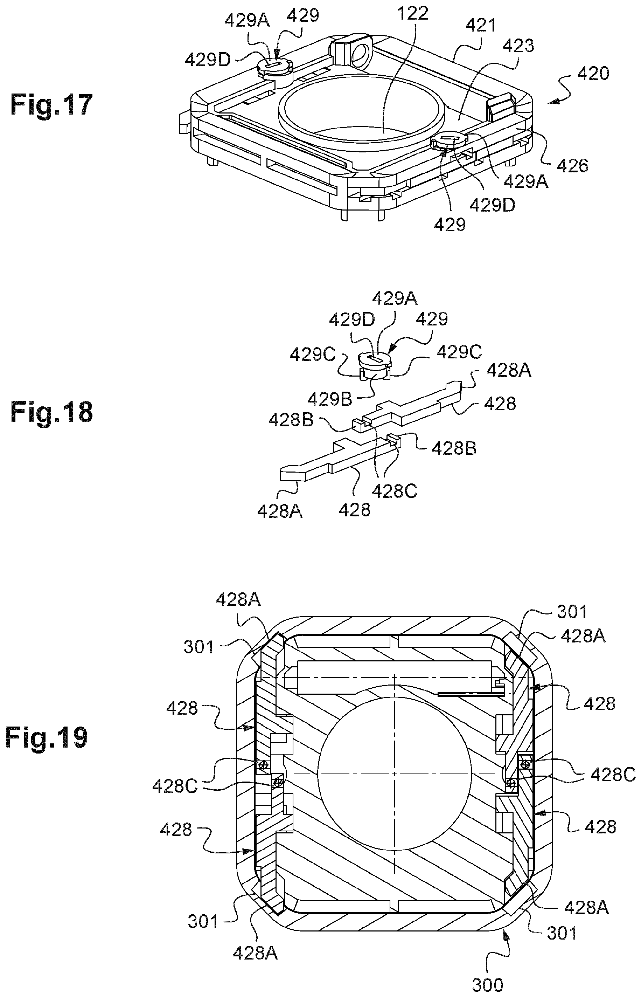

Selon l'exemple représenté sur les figures 17 à 19, l'extrémité opposée 428B de chaque élément déplaçable 428 comprend, sur sa face avant, une encoche 428C s'étendant transversalement à la direction de la forme allongée de l'élément déplaçable 428. Chaque encoche 428C est conçue pour accueillir et coopérer avec une partie en saillie 429C d'un actionneur 429 mobile entraînant le déplacement en translation de l'élément déplaçable 428 concerné.

Ici, chaque élément déplaçable 428 est entraîné par l'actionneur 429 mobile en rotation de manière à amener cet élément déplaçable 428 de sa position rétractée à sa position sortie, c'est-à-dire pour l'amener dans la position permettant le verrouillage de l'enjoliveur 420 sur le cadre support 300.

Dans l'exemple représenté sur les figures 17 à 19, l'actionneur 429 est un élément quart de tour de forme globalement cylindrique. Un actionneur 429 est conçu pour agir sur une paire d'éléments déplaçables 428 (les deux éléments déplaçables 428 de chaque paire sont donc déplacés simultanément par l'actionneur 429 associé). Il est ainsi ici prévu deux actionneurs mobiles 429.

Comme le montre la figure 18, chaque actionneur 429 se présente sous la forme d'un pion comprenant une tête de manœuvre 429A et un corps cylindrique 429B. Comme le montre la figure 17, la tête de manœuvre 429A de chaque actionneur 429 est accessible depuis la face avant de l'enjoliveur 420. La tête de manœuvre 429A de chaque actionneur 429 comprend une encoche de manœuvre 429D de forme rectangulaire destinée à recevoir la pointe d'un outil de manœuvre tel qu'un tournevis afin qu'un utilisateur déplace en rotation de l'actionneur 429.

Comme le montre également la figure 18, le corps cylindrique 429B de l'actionneur 429 comprend deux parties en saillie 429C. Chacune des deux parties en saillie 429C est conçue pour coopérer avec une encoche 428C de l'élément déplaçable 428. Ainsi, lors de la mise en rotation de chaque actionneur 429 par l'introduction d'un tournevis dans l'encoche de manœuvre 429D associée, chaque partie en saillie 429C est engagée dans l'encoche 428C de l'élément déplaçable 428 associé afin de déplacer ce dernier. En effet, le déplacement en rotation de l'actionneur 429 est transformé, grâce à la coopération de chaque partie en saillie 429C de l'actionneur 429 avec l'encoche 428C de l'élément déplaçable 428, en un mouvement de translation de chaque élément déplaçable 428.

Ainsi, lorsque l'actionneur 429 est actionné en rotation dans un sens par un utilisateur, par exemple le sens horaire, chaque élément déplaçable 428 est déplacé de sa position rétractée à sa position sortie (correspondant alors au verrouillage de l'enjoliveur 420 sur le cadre support 300). Lorsque l'actionneur 429 est actionné en rotation dans un sens inverse, par exemple ici dans le sens antihoraire, chaque élément déplaçable 428 est déplacé de sa position sortie à sa position rétractée.

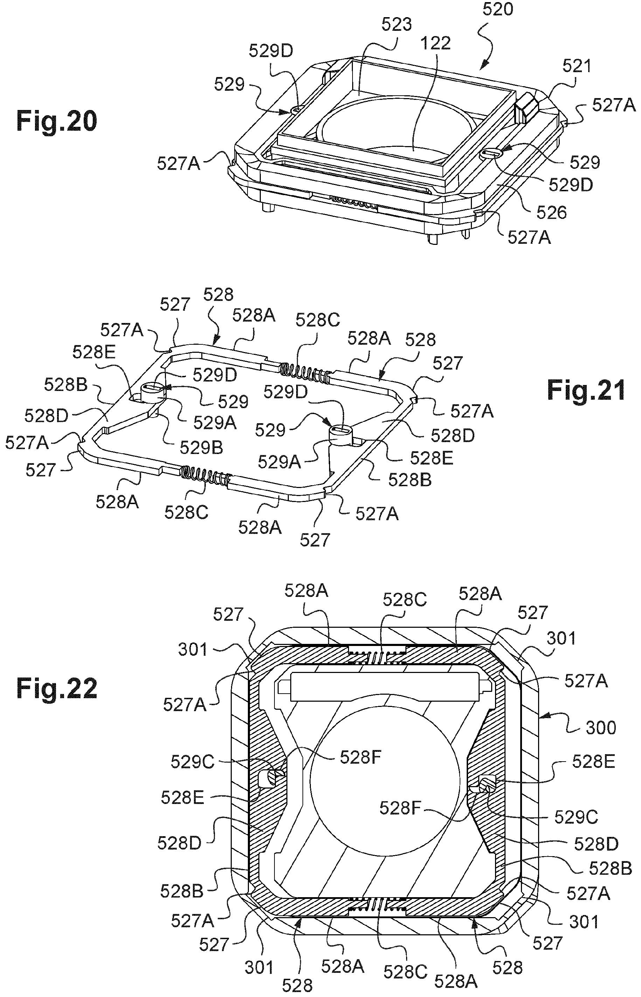

Selon la configuration représentée sur les figures 20 à 22, il est prévu deux éléments déplaçables 528 présentant une forme en U. La forme en U de chaque élément déplaçable 528 est constituée de deux branches latérales 528A et d'une branche centrale 528B. Pour chaque élément déplaçable 528, la partie de jonction entre chaque branche latérale 528A et la branche centrale 528B est une portion 527 en angle coupé destinée à coopérer avec un logement 301 du cadre support 300. Plus précisément, chaque portion 527 en angle coupé comprend une excroissance munie d'un rebord de butée 527A destiné à venir en butée avec une partie du logement 301 associé du cadre support 300 lors du verrouillage de l'enjoliveur 520 sur le cadre support 300.

Ainsi, chaque élément déplaçable en forme de U est ici destiné à coopérer avec deux logements 301 du cadre support 300. Ainsi, avantageusement ici, un seul élément déplaçable 528 sert pour le verrouillage d'un côté complet de l'enjoliveur 520 sur le cadre support 300. Cela permet par exemple de renforcer le verrouillage de l'enjoliveur 520 sur le cadre support 300.

Comme le montre la figure 20, chaque élément déplaçable 528 en forme de U est positionné dans un logement correspondant formé dans la paroi latérale 526 de l'enjoliveur 520. Les deux éléments déplaçables 528 sont ici positionnés de manière symétrique en regard dans les logements correspondants de la paroi latérale 526 de l'enjoliveur 520 de manière que les deux branches centrales 528B des deux éléments déplaçables 528 sont parallèles et que les branches latérales 528A sont deux à deux alignées. L'ensemble des deux éléments déplaçables 528 ainsi positionnés forment donc un cadre.

Comme le montre la figure 21, les branches latérales 528A de l'un des deux éléments déplaçables 528 sont reliées aux branches latérales 528A de l'autre des deux éléments déplaçables 528 par un ressort de poussée 528C. Plus précisément, deux ressorts de poussée 528C font la liaison entre les branches 528A de chaque élément déplaçable 528. Chaque ressort de poussée 528C est ici représenté dans un état stable comprimé.

La combinaison des deux éléments déplaçables 528 et des deux ressorts de poussée 528C forme donc un unique élément en forme de cadre. Ainsi, le mouvement de chaque élément déplaçable 528 n'est pas indépendant du mouvement de l'autre élément déplaçable 528. L'état des ressorts de poussée 528C est alors associé à la position (rétractée ou sortie) de l'élément déplaçable 528. Lorsque les ressorts de poussée sont dans leur état stable comprimé, les éléments déplaçables 528 sont en position rétractée. A l'inverse, lorsque les deux ressorts de poussée 528C sont dans un état contraint détendu, les deux éléments déplaçables 528 sont en position sortie.

Afin de pouvoir mettre en mouvement chaque élément déplaçable 528, chaque branche 528B de chaque élément déplaçable 528 comprend une partie centrale 528D faisant saillie vers l'intérieur de l'enjoliveur 520 (figure 21 et 22). Chaque partie centrale 528D comprend une fenêtre de manœuvre 528E. Chaque fenêtre de manœuvre 528E présente une forme globalement rectangulaire avec une partie 528F en décroché positionnée à une extrémité intérieure de la fenêtre de manœuvre 528E (figure 22).

Comme le montre la figure 21, chaque fenêtre de manœuvre 528E est destinée à recevoir un actionneur 529 mobile conçu pour permettre le déplacement en translation de chaque élément déplaçable 528. Ici, chaque élément déplaçable 528 est entraîné par l'actionneur 529 mobile en rotation de manière à amener cet élément déplaçable 528 de sa position rétractée à sa position sortie (permettant le verrouillage de l'enjoliveur 520 sur le cadre support 300). Comme le montre la figure 21, il est prévu ici deux actionneurs mobiles 529.

Chaque actionneur 529 est ici un élément quart de tour présentant une tête de manœuvre 529A globalement cylindrique et une partie de verrouillage 529B destinée à coopérer avec la partie 528F en décroché de la fenêtre de manœuvre 528E de la partie centrale 528D de la branche 528B de l'élément déplaçable 528 associé.

La tête de manœuvre 529A de chaque actionneur 529 comprend une encoche de manœuvre 529D de forme rectangulaire destinée à recevoir la pointe d'un outil de manœuvre tel qu'un tournevis afin de déplacer en rotation de l'actionneur 529.

Comme le montre la figure 20, l'encoche de manœuvre 529D de chaque actionneur 529 est accessible depuis la face avant de l'enjoliveur 520.

La partie de verrouillage 529B de chaque actionneur 529 comprend une partie 529C en angle droit avec deux rebords de butée et une partie en arc de cercle. La partie 529C en angle droit est conçue pour venir coopérer avec la partie 528F en décroché de la fenêtre de manœuvre 528E de la partie centrale 528D de la branche 528B de l'élément déplaçable 528 associé.

Le positionnement de la partie de verrouillage 529B de chaque actionneur 529 dans la fenêtre manœuvre 528E a un impact sur l'état du ressort de poussée 528C et donc sur le verrouillage de l'élément déplaçable 528 sur le cadre support 300.

En effet, lors de la rotation de l'actionneur 529, par exemple ici dans le sens antihoraire, la partie de verrouillage 529B de l'actionneur 529 vient en butée avec la fenêtre de manœuvre 528E (sans coopérer avec la partie 528F en décroché de la fenêtre de manœuvre 528E de la partie centrale 528D de la branche 528B de l'élément déplaçable associé). Dans ce cas, les ressorts de poussée 528C, qui sont déplacés simultanément, sont ramenés dans leur état stable comprimé et maintenus dans cette position grâce à la butée de la partie de verrouillage 529B de l'actionneur 529 dans la fenêtre de manœuvre 528E.

Comme cela est représenté sur la figure 22, dans ce cas, l'excroissance de chaque portion 527 de l'élément déplaçable 528 mis en mouvement (sur la figure 22, l'élément déplaçable de droite) ne coopère pas avec le logement 301 associé du cadre support 300. Cet élément déplaçable 528 est donc en position rétractée et l'enjoliveur 520 n'est pas verrouillé sur le cadre support 300 (sur ce côté).

A l'inverse, lors de la rotation de l'actionneur 529 par exemple ici dans le sens horaire, la partie de verrouillage 529B de l'actionneur 529 vient en butée avec la partie 528F en décroché de la fenêtre de manœuvre 528E de la partie centrale 528D de la branche 528B de l'élément déplaçable associé et coopère exactement avec celle-ci (voir l'élément déplaçable 528 de gauche sur la figure 22). Dans ce cas, les ressorts de poussée 528C sont amenés dans un état précontraint détendu. Ainsi, la rotation de l'actionneur 529 dans le sens horaire contraint les ressorts de poussée 528C de leur état de repos comprimé vers l'état précontraint détendu. Comme le montre la figure 22, dans ce cas, l'excroissance de chaque portion 527 de l'élément déplaçable 528 mis en mouvement coopère avec le logement 301 associé du cadre support 300. Cet élément déplaçable 528 est donc en position sortie et l'enjoliveur 520 est verrouillé sur le cadre support 300 (sur ce côté).

En pratique, le montage de l'enjoliveur 520 sur le cadre support 300 s'effectue pour chaque élément déplaçable 528 successivement. Ainsi, lorsque l'un des éléments déplaçables est en position sortie, les ressorts de poussée 528C se détendent mais conservent encore une contrainte de compression due à l'autre élément déplaçable 528 qui est quant à lui encore en position rétractée (et comme indiqué précédemment chaque ressort de poussée 528C tend en permanence à revenir dans son état stable comprimé). Les ressorts de poussée 528C ne sont donc effectivement au repos que lorsque les deux éléments déplaçables 528 sont tous les deux en position sortie.

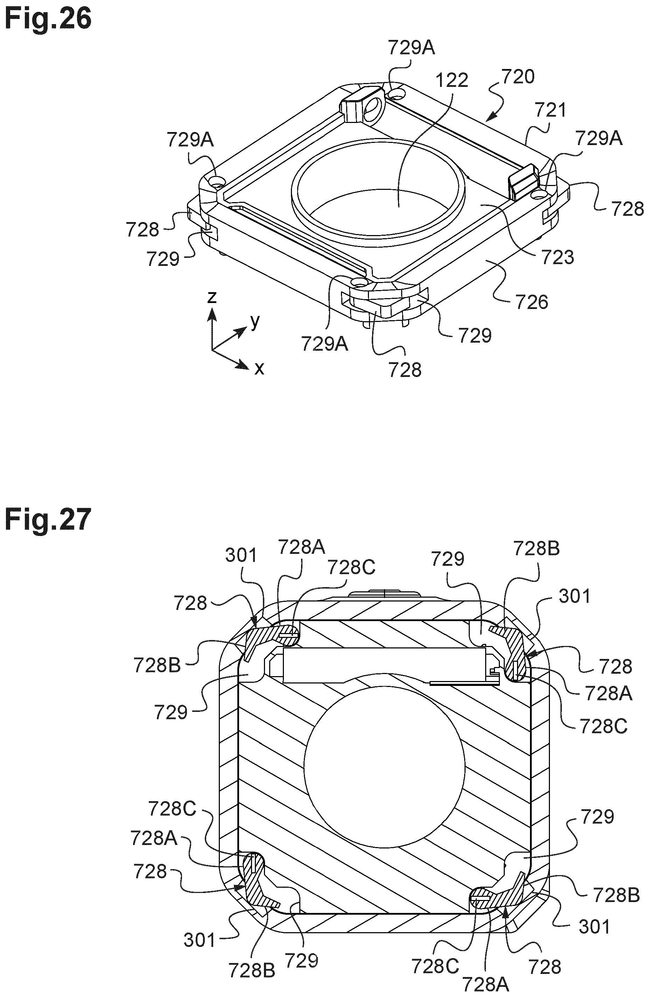

Selon un autre type d'enjoliveur 720 représenté sur les figures 26 et 27, les moyens de montage de l'enjoliveur 720 sont des éléments déplaçables 728 à rotation entre une position déverrouillée et une position verrouillée. Il est prévu ici quatre éléments déplaçables 728 positionnés dans des logements 729 localisés dans les quatre coins de la paroi latérale 726 de la partie structurelle 721 en forme de cadre de l'enjoliveur 720. Chaque élément déplaçable 728 est destiné à coopérer avec un logement 301 du cadre support 300.

Comme le montrent les figures 26 et 27, chaque élément déplaçable 728 est ici un élément quart de tour. Chaque élément déplaçable 728 est déplaçable entre une position déverrouillée et une position verrouillée de manière à autoriser le montage de l'enjoliveur 720 sur le cadre support 300 et à le verrouiller sur celui-ci. Ici, chaque élément déplaçable 728 est déplaçable en rotation autour de l'axe z orthogonal à la face avant 723 de l'enjoliveur 720 (figure 26). Tous les éléments déplaçables 728 sont déplaçables en rotation dans un même sens prédéfini, par exemple ici le sens antihoraire, depuis la position verrouillée pour atteindre la position déverrouillée (et par symétrie dans un autre même sens prédéfini, par exemple ici le sens horaire, depuis la position déverrouillée pour atteindre la position verrouillée).

Comme le montre la figure 27, chaque élément déplaçable 728 présente une forme en L en deux parties : une partie de manœuvre 728A et une partie de verrouillage 728B. La partie de manœuvre 728A présente une forme allongée (correspondant à la partie verticale du « L ») tandis que la partie de verrouillage 728B s'étend globalement perpendiculairement à la partie de manœuvre 728A.

Comme le montre également la figure 27, chaque partie de manœuvre 728A présente sur sa face avant une encoche de manœuvre 728C destinée à permettre le déplacement de l'élément déplaçable 728 associé en rotation entre ses positions déverrouillée et verrouillée (et inversement), par exemple grâce à l'introduction d'un outil tel qu'un tournevis au travers d'une fenêtre de manœuvre 729A. Chaque encoche de manœuvre 728C joue donc le rôle de pivot pour l'élément déplaçable 728 associé.

Chaque encoche de manœuvre 728C est accessible via la fenêtre de manœuvre 729A formée sur la face avant de la partie structurelle 721 en forme de cadre de l'enjoliveur 720 (figure 26). Chaque fenêtre de manœuvre 729A présente ici une forme globalement cylindrique.

La partie de verrouillage 728B est destinée à venir en butée contre une paroi d'un logement 729 associé de la paroi latérale 726 de la partie structurelle 721 en forme de cadre de l'enjoliveur 720 lorsque l'élément déplaçable 728 est en position déverrouillée. En position verrouillée, l'angle formé entre la partie de manœuvre 728A et la partie de verrouillage 728B de chaque élément déplaçable vient quant à lui en butée avec une paroi du logement 301 du cadre support 300 (figure 27).

Finalement, quel que soit le mode de réalisation envisagé, le montage de l'enjoliveur 120, 220 ; 320, 420, 520, 620, 720 sur le cadre support 100 ; 200 ; 300 de l'appareillage électrique 1 ; 5 est réalisé en amenant les moyens de montage de l'enjoliveur 120, 220 ; 320, 420, 520, 620, 720 à coopérer avec les moyens de réception du cadre support 100 ; 200 ; 300 par exemple en amenant chaque moyen de montage de sa position déverrouillée à sa position verrouillée ou de sa position rétractée à sa position sortie. Le montage de l'enjoliveur 120, 220 ; 320, 420, 520, 620, 720 s'effectue dans un premier temps selon une première configuration (par exemple horizontale).

En cas de changement d'orientation de l'appareillage électrique 1 ; 5, par exemple pour l'orienter selon une autre configuration (par exemple verticale), un installateur démontera l'enjoliveur 120, 220 ; 320, 420, 520, 620, 720 (en déplaçant chaque moyen de montage de sa position verrouillée à sa position déverrouillée ou de sa position sortie à sa position rétractée), puis l'ensemble de l'appareillage électrique 1 ; 5. Cependant il pourra réutiliser les mêmes éléments pour l'orientation différente de l'appareillage électrique 1 ; 5 car le cadre support 100 ; 200 ; 300 comprend des moyens de réception permettant le montage de l'enjoliveur 120, 220 ; 320, 420, 520, 620, 720 selon deux positions décalées l'une par rapport à l'autre d'une rotation de 90 degrés. L'enjoliveur est ensuite monté sur le cadre support 100 ; 200 ; 300 placé dans sa nouvelle position grâce à la coopération des moyens de montage de l'enjoliveur 120, 220 ; 320, 420, 520, 620, 720 à coopérer avec les moyens de réception du cadre support 100 ; 200 ; 300.

## Revendications

1. Appareillage électrique (1 ; 5) étanche comportant au moins un enjoliveur (320, 420, 520, 620) et un cadre support (300) sur lequel est rapporté chaque enjoliveur (320, 420, 520, 620), ledit cadre support (300) comportant un rebord périphérique qui délimite au moins une ouverture accueillant ledit enjoliveur (320, 420, 520, 620), chaque enjoliveur (320, 420, 520, 620) étant équipé de moyens de montage adaptés à coopérer avec des moyens de réception complémentaires prévus dans le rebord périphérique du cadre support (300), **caractérisé en ce que** les moyens de réception complémentaires du cadre support (300) sont des logements (301) prévus dans le cadre support (300) aux quatre coins d'une ouverture d'accueil dudit enjoliveur (320, 420, 520, 620) les moyens de montage (328, 428, 528, 628) de l'enjoliveur (320, 420, 520, 620) sont des éléments déplaçables à translation entre une position rétractée, qui correspond au déverrouillage de l'enjoliveur (320, 420, 520, 620) du cadre support (300), et une position sortie, qui correspond au verrouillage de l'enjoliveur (320, 420, 520, 620) dans les logements (301) du cadre support (300),
de sorte que lesdits moyens de montage (328, 428, 528, 628) de l'enjoliveur (320, 420, 520, 620) coopèrent avec lesdits logements (301) du cadre dans chacune de deux positions de l'enjoliveur (320, 420, 520, 620) sur le cadre support (300) orientées à 90 degrés l'une par rapport à l'autre.

2. Appareillage électrique selon la revendication 1, dans lequel chaque élément déplaçable (328, 628) à translation est entraîné par un actionneur (329) mobile en translation de manière à amener l'élément déplaçable (328, 628) de sa position rétractée jusqu'à sa position sortie.

3. Appareillage électrique selon la revendication 1, dans lequel chaque élément déplaçable (428, 528) à translation est entraîné par un actionneur (429, 529) mobile en rotation de manière à amener l'élément déplaçable (428, 528) de sa position rétractée jusqu'à sa positon sortie et de sa position sortie jusqu'à sa position rétractée.

## Patentansprüche

1. Dichtes Elektrogerät (1; 5) mit mindestens einem Zierring (320, 420, 520, 620) und einem Trägerrahmen (300), auf dem jeder Zierring (320, 420, 520, 620) befestigt ist, wobei der Trägerrahmen (300) einen umlaufenden Rand aufweist, der mindestens eine Öffnung umgrenzt, die den Zierring (320, 420, 520, 620) aufnimmt, wobei jeder Zierring (320, 420, 520, 620) mit Montagemitteln ausgestattet ist, die dazu ausgelegt sind, mit im umlaufenden Rand des Trägerrahmens (300) vorgesehenen komplementären Aufnahmemitteln zusammenzuwirken, **dadurch gekennzeichnet, daß** die komplementären Aufnahmemittel des Trägerrahmens (300) im Trägerrahmen (300) an den vier Ecken einer Aufnahmeöffnung des Zierrings (320, 420, 520, 620) vorgesehene Vertiefungen (301) sind, daß die Montagemittel (328, 428, 528, 628) des Zierrings (320, 420, 520, 620) zwischen einer zurückgezogenen Position, die einer Entriegelung des Zierrings (320, 420, 520, 620) des Trägerrahmens (300) entspricht, und einer vorgeschobenen Position, die einer Verriegelung des Zierrings (320, 420, 520, 620) in den Vertiefungen (301) des Trägerrahmens (300) entspricht, verschiebbare Elemente sind ,
so daß die Montagemittel (328, 428, 528, 628) des Zierrings (320, 420, 520, 620) mit den Vertiefungen (301) des Rahmens in jeder der beiden um 90° zueinander versetzten Positionen des Zierrahmens (320, 420, 520, 620) auf dem Trägerrahmen (300) zusammenwirken.

2. Elektrogerät gemäß Anspruch 1, bei dem jedes verschiebbare Element (328, 628) von einem verschiebbaren Stellglied (329) angetrieben wird, um das verschiebbare Element (328, 628) von seiner zurückgezogenen Position zu seiner vorgeschobenen Position zu bringen.

3. Elektrogerät gemäß Anspruch 1, bei dem jedes verschiebbare Element (428, 528) von einem drehbaren Stellglied (429, 529) angetrieben wird, um das verschiebbare Element (428, 528) von seiner zurückgezogenen Position zu seiner vorgeschobenen Position und von seiner vorgeschobenen Position zu seiner zurückgezogenen Position zu bringen.

## Claims

1. Sealed electrical equipment (1; 5) comprising at least one trim (320, 420, 520, 620) and a support frame (300) to which each trim (320, 420, 520, 620) is attached, said support frame (300) comprising a peripheral rim which delimits at least one opening accommodating said trim (320, 420, 520, 620), each trim (320, 420, 520, 620) being equipped with mounting means, adapted to co-operate with complementary receiving means provided in the peripheral rim of the support frame (300), **characterised in that**
the complementary receiving means of the support frame (300) are chambers (301) provided in the support frame (300) at the four corners of an opening for accommodating said trim (320, 420, 520, 620), the mounting means (328, 428, 528, 628) of the trim (320, 420, 520, 620) are elements that are translationally movable between a retracted position, which corresponds to the unlocking of the trim (320, 420, 520, 620) from the support frame (300), and an extended position, which corresponds to the locking of the trim (320, 420, 520, 620) in the chambers (301) of the support frame (300),
such that said mounting means (328, 428, 528, 628) of the trim (320, 420, 520, 620) cooperates with said chambers (301) of the frame in each of two positions of the trim (320, 420, 520, 620) on the support frame (300) oriented at 90 degrees from each other.

2. Electrical equipment according to claim 1, wherein each translationally movable element (328, 628) is driven by a translationally movable actuator (329), so as to bring the movable element (328, 628) from its retracted position to its extended position.

3. Electrical equipment according to claim 1, wherein each translationally movable element (428, 528) is driven by a rotatably movable actuator (429, 529), so as to bring the movable element (428, 528) from its retracted position to its extended position and from its extended position to its retracted position.
